# EUROPEAN PATENT APPLICATION

(11) **EP 4 122 848 A1**
(43) Date of publication of application: **25.01.2023**
(21) Application number: 22185778.2
(22) Date of filing: 19.07.2022
(51) Int. Cl.: B65G 47/51, B65G 47/82, B65G 47/64

(54) **PRODUCT FEEDING ASSEMBLY FOR AN AUTOMATIC PACKAGING PLANT**

(30) Priority: 20.07.2021 IT 202100019208
(71) Applicant: Cavanna S.p.A., 28077 Prato Sesia (NO) (IT)
(72) Inventor: BROLLI, Mr. Elio, I-28077 Prato Sesia (Novara) (IT); IOPPA, Mr. Lorenzo, I-28077 Prato Sesia (Novara) (IT)
(74) Representative: Gallarotti, Franco

(57) **Abstract**

A feeding assembly (SA) of products for an automatic packaging plant comprises a buffer device (1) and an unloading arrangement, which includes an extraction station (10) and an output station (4). The extraction station (10) comprises a plurality of pusher devices in positions on top of one another, and the output station (4) comprises a plurality of transfer conveyors in positions on top of one another. Each transfer conveyor is be configured to receive thereon at least one product unloaded from a corresponding product support (7) of the buffer device (1) by means of a corresponding pusher device. The output station (4) comprises a plurality of motorized supporting systems, one for each transfer conveyor, each motorized supporting system being configured for enabling the variation of the position in height of the corresponding transfer conveyor. The pusher devices are controllable independently from one another, and the motorized supporting systems are controllable independently from one another.

## Description

### Field of invention

The present invention refers in general to feeding assemblies for automatic plants for the packaging of generic products, in particular food products.

### Background art

In various industrial fields there arises the need to proceed with the packaging of items which leave a generic production unit. For example, in the case of certain productions in the field of the food industry, the products that come out of an oven in a continuous way must be transported to a packaging unit which - also continuously - encloses the same products in a corresponding wrapping, individually or in groups.

In fields of this type, there is frequently a need to provide - between a production unit and a packaging unit - a product feeding assembly conceived for temporarily accumulating variable amounts of the products. These feeding assemblies are usually based on the use of a so-called buffer device.

Buffer devices usually comprise at least one chain which extends along a closed-loop path and carries a plurality of supports for the products, the movement of the chain, and therefore of the associated supports, enabling the products to be transferred between an input area and an output area of the device. The input area is usually headed by an inlet conveyor of the products, fed by a relevant production unit; to this end, a loading arrangement is provided at the input area, designed to transfer the products from the inlet conveyor to the product supports associated with the chain of the buffer device. At the output area of the buffer device, on the other hand, an unloading arrangement is provided, configured for causing the passage of the products from the corresponding supports to an outlet conveyor, which in turn feeds a product packaging unit. As mentioned, the purpose of the buffer device is essentially to temporarily accumulate variable amounts of the products, for example when there occur variations between the speed of the production unit and the speed of the packaging unit.

In most known solutions, downstream of the buffer device, i.e. at the unloading arrangement, a single outlet conveyor is provided.

Feeding assemblies have also been proposed, the unloading arrangement of which is designed to transfer the products from the supports of the chain of the buffer device to two different outlet conveyors, which in turn feed two distinct packaging units. While these solutions may allow for an increase in the production capacity, they also have some drawbacks, mainly tied to possible interruptions in the operation of one of the two packaging units downstream of the buffer device.

In particular, given that the product supports of the buffer device are arranged along a closed-loop chain, it is essential that all the products are unloaded at the corresponding output area: if this were not the case, at the input area of the buffer device there might return supports already carrying corresponding products, with the practical impossibility of taking additional products conveyed by the inlet conveyor (the products already present on the supports could be "dislodged" by the new incoming products, falling however in the inside of the buffer device and causing consequent malfunctions).

It will be understood that, in the same way, in the event that the operation of one of the packaging units downstream of the buffer device stops for any reason, it must be avoided that the unit in question continues to be fed with products leaving the buffer device.

In order to deal with situations of this type, the operation of the buffer device can be interrupted, that is, the movement of the chain thereof can be stopped. However, the product supports are hung on the closed-loop chain, and the sudden interruption of the driving of the chain can cause oscillations of the same supports, with the risk of accidental fall of the products inside the buffer device, with the consequent inconveniences. Stopping the operation of the buffer device may also cause accumulation of products at the outlet end of the inlet conveyor, which products must subsequently be manually resumed, if not discarded (particularly in the case of certain food products). It should be noted, in this regard, that in some production realities it is not possible to quickly interrupt the operation of the production unit located upstream of the feeding assembly which includes the buffer: think, for example, of the case of an oven for the continuous production of food products.

### Aim and summary of the invention

The present invention is mainly aimed at solving the indicated drawbacks, and in particular to obtain a product feeding assembly which is capable of feeding, from a single buffer device, a plurality of packaging units, while enabling at the same time to deal effectively with possible interruptions in the operation of one or more of the aforesaid packaging units.

According to the present invention, this aim is achieved by a product feeding assembly for an automatic packaging plant having the characteristics forming the subject of Claim 1. Preferential embodiments form the subject of the dependent claims. The claims form an integral part of the technical teaching provided herein in relation to the invention.

### Brief description of the drawings

The present invention will now be described in detail with reference to the attached drawings, given by way of non-limiting example only, wherein:
- figures 1 and 2 are schematic perspective views, from different angles, of a product feeding assembly for an automatic packaging plant in accordance with possible embodiments;
- figures 3 and 4 are schematic views, , respectively in front and side elevation, of a product feeding assembly for an automatic packaging plant in accordance with possible embodiments;
- figure 5 is a partial and schematic sectional view, substantially according to live V-V of figure 4;
- Figure 6 is a partial and schematic sectional view, substantially according to line VI-VI of figure 5;
- Figure 7 is a larger-scale detail of figure 6; and
- Figures 8, 9, 10 and 11 are partial and schematical sectional views, substantially according to line VIII-VIII of figure 4, aimed at illustrating four different possible operating conditions of an output station of a product feeding assembly according to possible embodiments.

### Description of preferential embodiments

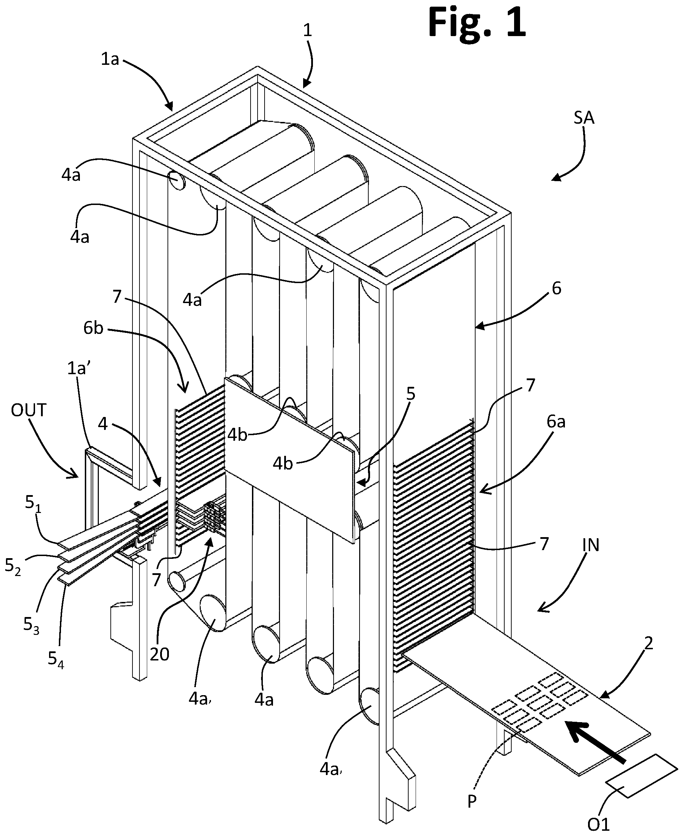

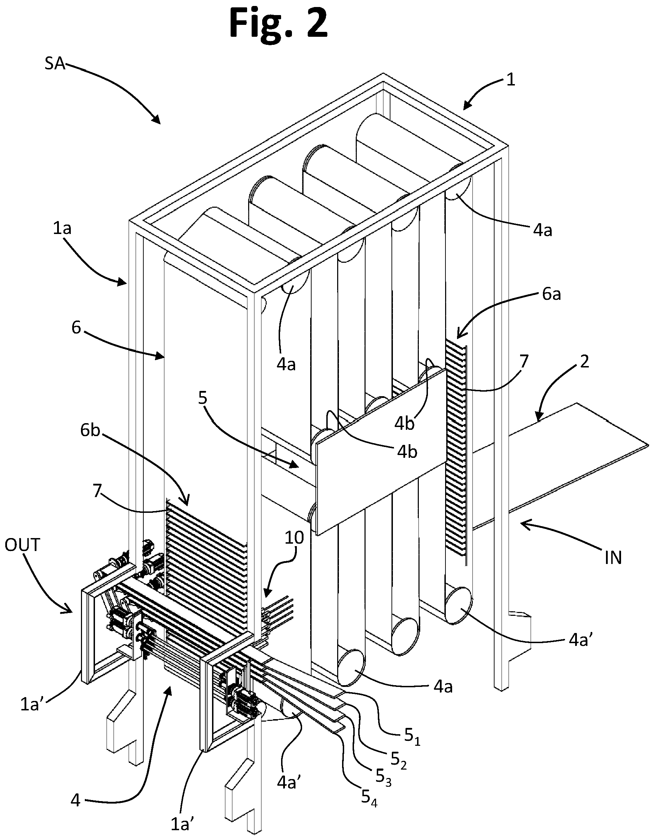

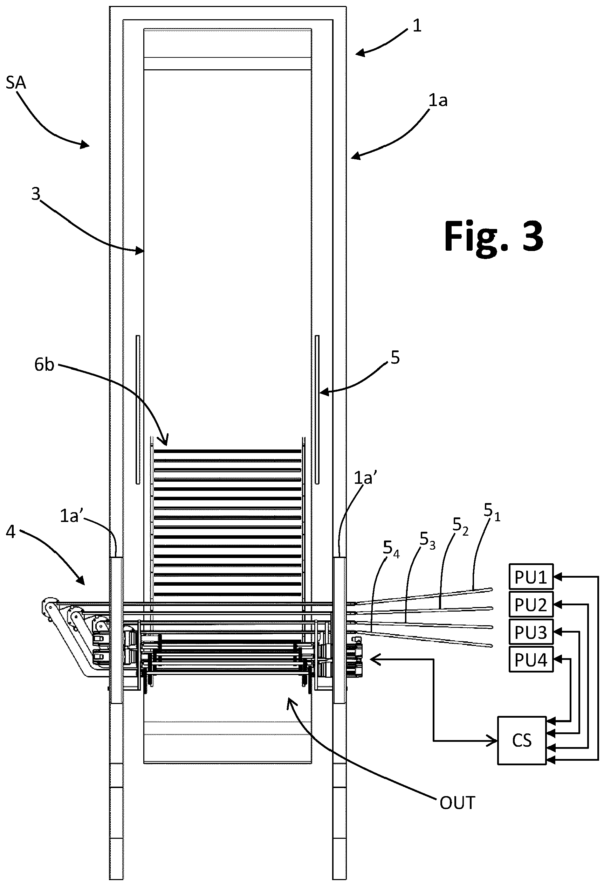

Figures 1-4 schematically represent a product feeding assembly for an automatic packaging plant, in accordance with embodiments of the present invention. In the non-limiting example shown in the figures, the aforementioned assembly, designated as a whole with SA, is configured for feeding a plurality of packaging units, represented only schematically by the blocks indicated with PU1-PU4 in figure 3.

The feeding assembly SA comprises a buffer device, designated as a whole with 1, for temporary storage of products. In the following, for simplicity, the device 1 will also be identified only as "buffer".

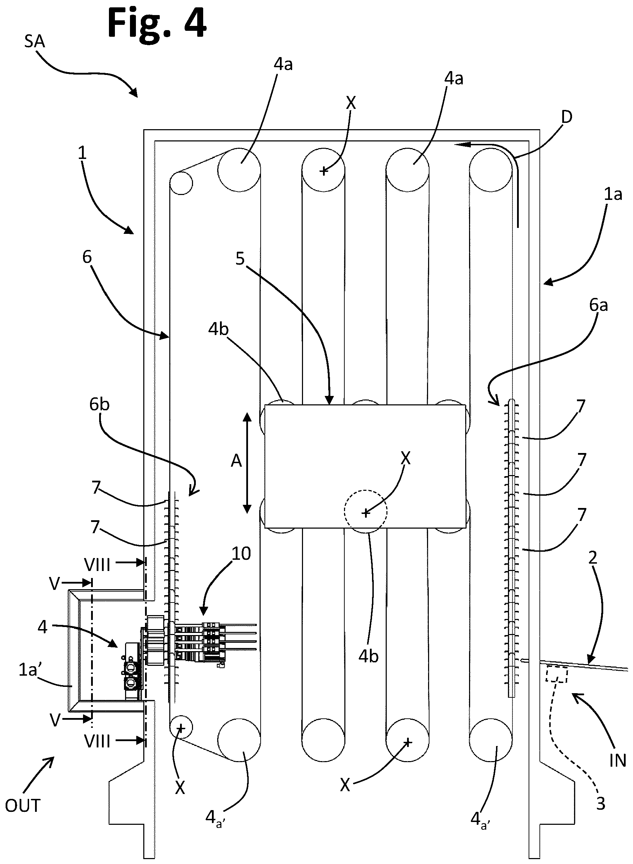

The buffer 1 has an input area IN, at which the outlet end of an inlet conveyor 2 is located. For example, the conveyor 2 can carry a continuous flow of products P (figure 1), for example arranged in ranks, coming from a production unit, schematically represented by block O1 only in figure 1 (for example an oven, in the case of bakery food products). The conveyor 2, particularly at least at the outlet end thereof, has associated thereto a tracking system, indicated with 3 and represented schematically only in figure 4, for the sake of greater clarity of the drawings. The tracking system 3 may be of any known conception in the field (see for example, on this subject, IT-B-1 195 128 in the name of the same applicant) and is essentially configured to enable the correct transfer of products from the outlet end of the conveyor 2 to corresponding supports associated with a chain of the buffer 1, as described below.

The buffer 1 has an output area, at which there is an unloading arrangement, described below; as will be seen, this arrangement is configured for transferring the products from the aforementioned supports of the chain of the buffer 1 to corresponding conveyor means.

In various embodiments, the aforementioned unloading arrangement comprises an output station, designated as a whole with 4, which is configured for feeding the products unloaded from the buffer 1 to a plurality of outlet conveyors, each of which feeds a respective packaging unit PU1-PU4. In the example under consideration, four outlet conveyors are provided, designated by references 5₁, 5₂, 5₃ and 5₄, and represented only partially. In various embodiments, the conveyors 5 1-5₄ have their respective inlet ends in positions generally on top of one another, at fixed heights, and at a sufficient distance from each other to allow the passage of the products unloaded from the buffer 1, in the manner described below.

The outlet conveyors 5 1-5₄ then picks up respective continuous flows of products supplied by the output station 4 associated with the buffer 1, in order to feed each the respective packaging unit PU1-PU4.

The buffer 1 has the purpose of temporarily storing the products in the phases in which there occurs variations in the process speed of the production unit O1 or of the packaging units PU1-PU4. For example, in the event that one of the packaging units PU1-PU4 located downstream of the buffer 1 should temporarily slow down, the buffer may temporarily accumulate the products from the production unit to avoid a slowdown or a shutdown of the upstream production unit 01. On the other hand, the buffer 1 can also feed the downstream packaging units PU1-PU4 with respective constant flows of products in the event of a temporary slowdown or shutdown in the flow of products coming from the upstream production unit 01.

The buffer 1 comprises a stationary frame 1a that carries a plurality of guiding members for at least one chain or the like. In various embodiments, these guiding members comprise pulleys or wheels with fixed axes, some of which indicated with 4a, which are rotatable about respective fixed axes of rotation with respect to the aforementioned frame 1a. In the example, ten fixed-axis wheels 4a, specifically five upper wheels and five fixed-axis wheels, are provided for this purpose. At least two of these wheels, indicated with 4a', are motorized by respective motors, not visible. The remaining fixed-axis wheels are idle around their respective axes. Preferably, the motorized wheels 4a' are in positions close to the input IN and output OUT areas of the buffer 1, respectively.

In various embodiments, the buffer 1 comprises a carriage that is movable with respect to the stationary frame 1a, for example along a vertical direction A (figure 4), and that carries one or more wheels having a movable axis. In the illustrated non-limiting example, the above-mentioned carriage, designated as whole by a 5, carries six wheels with movable axis, some of which indicated with 4b, which are freely rotatable about their respective axes parallel to each other and parallel to the axes of rotation of the fixed-axis wheels 4a; in the example, the carriage 5 has three upper wheels 4b and three lower wheels 4b. The axes of some wheels 4a, 4b are indicated with X in figure 4.

The buffer 1 comprises at least one chain or the like 6, cooperating with the fixed-axis wheels 4a and with the movable-axis wheels 4b. The chain 6 extends along a closed-loop path that, in the example, has a prevailing vertical direction of development. The path of the chain 6 comprises two sections with fixed length and a number of sections with variable length, the length of which varies according to the position of the carriage 5 along the vertical direction A. Referring in particular to figure 4, the two mentioned sections having fixed length are those on the right and left of the chain 6, which are longer, comprising the portions indicated with 6a and 6b; the sections with variable length are those that extend between each of the movable-axis wheels 4b of the carriage 5 and a respective fixed-axis wheel 4a.

As it can be imagined for example from figure 4, by operating the motorized wheel 4a' at the right (assuming a counter-clockwise rotation of the wheels 4a') at a higher speed than that of the motorized wheel 4a' at the left, it is possible to obtain a shifting from the top down of the carriage 5, which produces an increase in the length of the chain sections that extend between the upper wheels 4b and 4a, and a decrease in the length of the chain sections that extend between the lower wheels 4a and 4b. Conversely, by operating the motorized wheel 4a' at the left at a higher speed than that of the motorized wheel 4a' at the right, it is possible to obtain a shift from the bottom up of the carriage 5, which produces an increase in the length of the chain sections that extend between the lower wheels 4b and 4a, and a decrease in the length of the chain sections that extend between the upper wheels 4b and 4to.

The at least one chain 6 carries a plurality of product shelves or supports, some of which indicated with 7 in figures 4-10. Note that in Figures 1-3, for the sake of greater clarity, only two portions of the chain equipped with the supports 7 are represented, indicated with 6a and 6b, but in the practical embodiment the supports 7 are provided along the entire development of the chain 6. The product supports 7 may be articulated to the chain 6 around respective axes which are transverse with respect to the longitudinal axis of the chain itself. The product supports 7 are preferably hung on the chain 6 and constantly oriented in a vertical direction. The supports 7 are arranged at a constant pitch along the chain 6, that is, at distances which are substantially fixed from each other.

Note that the buffer 1 may comprise two chains 6 parallel to each other, extending along respective closed-loop paths, superimposed to each other in the plane of representation of figure 4. In this case, each chain 6 cooperates with respective fixed-axis wheels 4a and with respective movable-axis wheels 4b, the wheels associated with a chain being coaxial to the homologous wheels of the other chain. Also with an arrangement of this type, each product support 7 may extend in an orthogonal direction with respect to the longitudinal axes of the two chains 6, and be articulated to them around a single articulation axis which is transverse with respect to the longitudinal axes of the chains 6.

As can be seen from figure 4, the arrangement of at the least one chain 6 is such that, at least at the output area OUT, the supports 7 are in positions one above the other in the vertical direction, as evidenced by portion 6b, to be moved in a vertical direction, particularly from top to bottom. Preferably, also at the input area IN, the supports 7 are vertically on top of one another, as evidenced by the portion 6a, and movable in the vertical direction, particularly from the bottom up.

In operation, the products coming from the inlet conveyor 2 are loaded onto the product supports 7, while the chain 6 moves along the closed-loop path in the direction indicated by the arrow D in figure 4. At the input area IN the supports 7 move from the bottom up and, to ensure a correct passage of the products from the conveyor 2 to these supports, it is preferable to provide for the tracking system indicated with 3 in figure 4; such a system 3 is essentially designed to cause a general swinging movement of the outlet end of the conveyor 2. In other words, the system 3 is configured to cause a temporary lifting of the outlet end of the conveyor 2, such that it "follows" a corresponding support 7 of the chain 6, in order to ensure the correct passage of the product or the rank of products on the support itself; then, the system 3 causes the outlet end of the conveyor 2 to be lowered at the next support 7 of the chain, and then again "follow" it and load thereon the product or the rank of products subsequently arriving on the conveyor 2, and so on in sequence.

In the outlet area OUT, all products contained in the product supports 7 are transferred to the outlet conveyors 5₁-5₄ by means of the previously mentioned unloading arrangement. The number of products accumulated in the buffer 1 is substantially proportional to the length of the section of the chain 6 comprised between the input area IN and the output area OUT, which - as mentioned - depends on the position of the carriage 5 in the vertical direction A.

Note that the buffer 1 may be made in any way known in the field. In this perspective, and although the figures illustrate the case of a vertical buffer (i.e., of the type in which the carriage 5 is movable in a vertical direction), it should be considered that the invention is also applicable to the case of horizontal buffers, that is with a carriage functionally similar to the one indicated here with 5, but which is movable in a horizontal direction.

The unloading arrangement of the assembly SA comprises an extraction station, configured for causing passage of products from the supports 7 to the output station 4. The aforementioned extraction station is designated as a whole with 10 in the figures.

As can be seen, for example, in figures 1-2 and 4, the closed-loop path of the chain 6 is configured in such a way that, at least at the outlet area OUT, a portion of the chain 6 - here the portion indicated with 6b - is movable in a vertical direction between the extraction station 10 and the output station 4, with its product supports 7 in positions on top of one another.

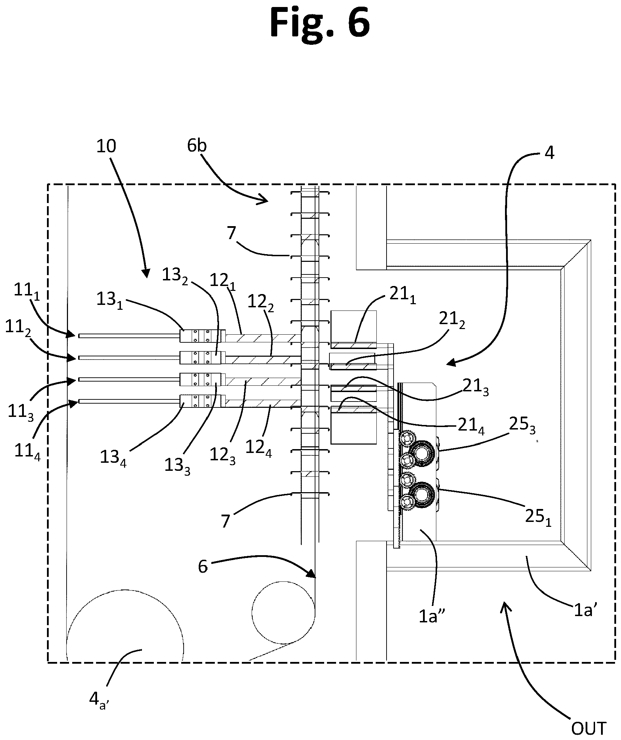

Referring in particular to figure 6, the extraction station 10 comprises a plurality of pusher devices, in positions on top of one another in vertical direction. In the non-limiting example shown there are four pusher devices, designated by references 11₁-11₄, it being understood that their number may be different.

In various preferential embodiments, the pusher devices 11₁-11₄ are movable in a vertical direction independently of each other, as explained below. However, the case of pusher devices mounted in stationary positions on a fixed structure, for example fixed to a part of the frame 1a of the buffer, is not excluded from the scope of the invention.

Each pusher device 11₁-11₄ has a respective pusher member 12₁-12₄, which can be moved in a transverse direction with respect to the portion 6b of the chain. The displacement, substantially linear, may be obtained through suitable actuator means 13₁-13₄, for example electric servomotors or possibly pneumatic actuators. As will be seen, according to an important aspect of the invention, the pusher devices 11₁-11₄, or their actuators 13₁-13₄, are operable independently of each other.

The pusher members 12₁-12₄ are displaceable between an inoperative position, in which one head end of the relevant pushing member 12₁-12₄ is in a position retracted from the chain portion 6b, and an operative position, in which said head end is inserted at least partially in a receiving space for the products, defined between two adjacent product supports 7 of the chain portion 6b. In this way, as can be imagined, following the transition from the inoperative position to the operative position, each pusher 12₁-12₄ laterally translates a product, or a rank of products, from the corresponding support 7 to the output station 4, in particular on a respective transfer conveyor, as explained below.

Of course, the transverse movement of the pusher members 12₁-12₄ between the respective inoperative and operative positions is rapid, and is synchronized with the movement in the vertical direction of the chain portion 6a. From figure 6 it is again possible to see how, in essence, the height position of the devices 11₁-11₄ is such that the head ends of the relevant pusher members 12₁-12₄ can simultaneously produce the unloading of a corresponding number of successive product supports 7.

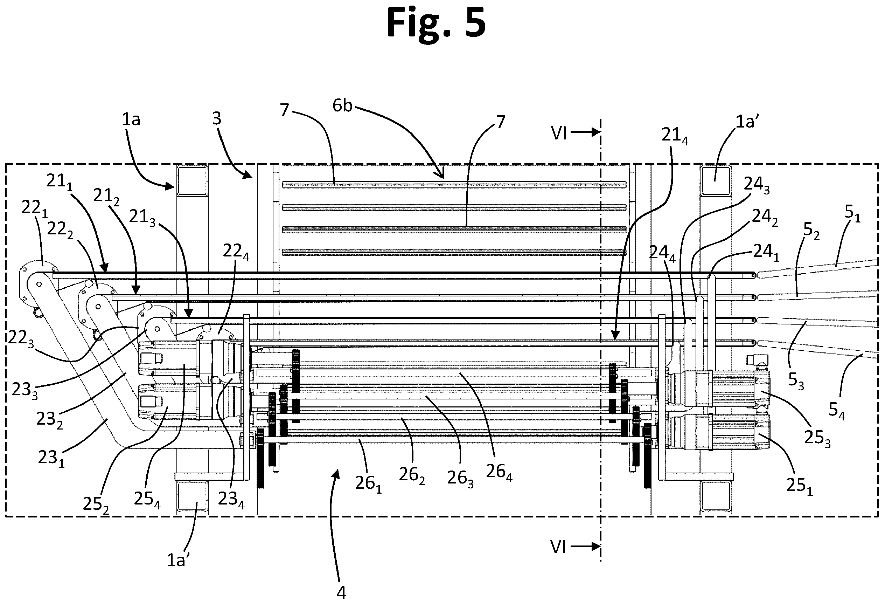

According to an important aspect of the invention, the output station 4 comprises a plurality of transfer conveyors. Referring again to the non-limiting example shown, and in particular to figure 5, the station 4 comprises four conveyors, designated by references 21₁-21₄. The conveyors 21₁-21₄ are arranged in positions on top of one another and extend longitudinally in a direction generally parallel to the axes X (figure 4) of the wheels 4a, 4b of the buffer 1. The conveyors preferably extend substantially horizontally and parallel to each other. For example, the conveyors 21₁-21₄ may be belt conveyors, as in the example shown, each equipped with its own motor 22₁-22₄ for driving the belt thereof.

Each conveyor 21₁-21₄ is configured for receiving on it at least one product, or a rank of products, which is unloaded from time to time from a relevant product support 7, by means of a corresponding pusher device 11₁-11₄, when the corresponding pusher member 12₁-12₄ is in the respective operative position. The concept can be drawn for example from figure 6, wherein a condition of substantial alignment between the conveyors 21₁-21₄ and the respective product supports 7 in the chain portion 6b is shown: in this condition, the displacement of the pusher members 12₁-12₄ in the respective operative positions causes the passage of the products from the supports 7 to the conveyors 21₁-21₄. Each transfer conveyor 21₁-21₄ then transfers the products to the respective output conveyor 51-55, to feed the respective packaging unit PU1-PU4 (figure 3).

According to a further important feature of the invention, each transfer conveyor 21₁-21₄ has a respective motorized supporting system, configured for enabling a variation of the position in the vertical direction or in height of the same conveyor.

The aforementioned supporting system generally comprises a supporting structure which is mounted vertically movable, to which a corresponding actuating arrangement is operatively associated. The movable supporting structure preferably comprises at least two respective structure portions, at the two longitudinal end regions of the corresponding conveyor. Referring to the non-limiting case of figure 5, these two structure portions are indicated, for various transporters 21₁-21₄, with references 23₁-23₄ and 24₁-24₄, respectively.

The movable mounting can be obtained in any known way, for example by associating a series of fixed linear guides to a stationary structure, in said guides there being engaged corresponding guided members (for example rolling members) carried by the movable structure, or vice versa. The stationary structure bearing the movable structures of the transporters 21₁-21₄ may possibly be obtained by corresponding portions of the same frame 1a of the buffer 1, such as for example the portions designated by 1a' in the figures.

The actuation arrangement equipping the supporting system of each transfer conveyor 21₁-21₄ may also be of any known design, in particular based on the use of a respective electric or fluid actuator, preferably a reversible actuator. In preferential embodiments, a bidirectional electric motor is provided, having at least one corresponding mechanical transmission arrangement associated thereto.

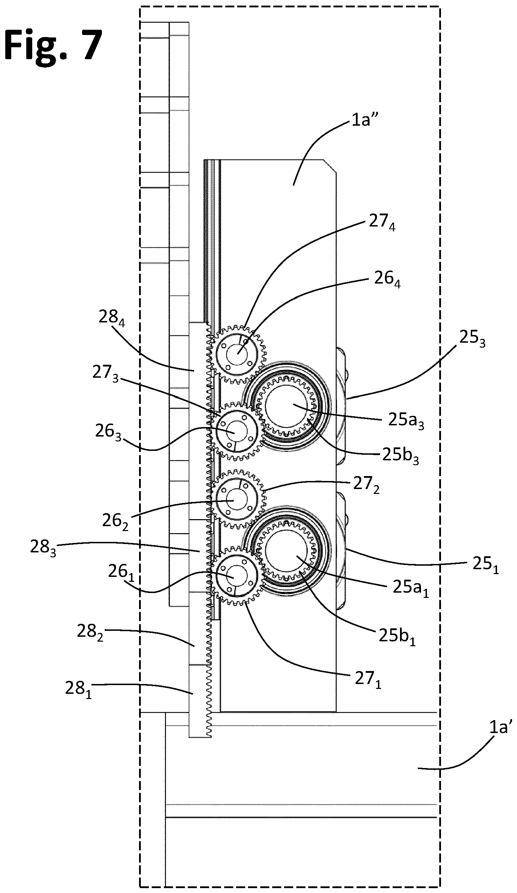

Referring to the case exemplified in the figures, the actuation arrangement of the transport system of each conveyor 21₁-21₄ comprises an electric motor, preferably mounted in a fixed position on a stationary structure, which may comprise the same frame 1a of the buffer 1. The aforementioned electric motors are designated by 25₁-25₄ for example in figure 5, while figure 7 exemplifies the case of a plate 1a" for mounting the motors 25₁ and 25₃, associated to a respective portion 1a' of the frame of the buffer 1 (a similar plate may be provided at the opposite side, for the motors 25₂ and 25₄).

In various embodiments, a gear wheel, acting as a pinion, is kinematically connected to the output shaft of each motor, which is meshed with a corresponding rack carried by the movable supporting structure of the corresponding conveyor 21₁-21₄.

In the case of the non-limiting example of figure 5, the output shaft of each motor 25₁-25₄ has a corresponding transmission rod 26₁-26₄ operatively associated thereto, which bears - at two opposite end regions thereof - respective gear wheels acting as a pinion, designed to cooperate with respective racks associated with the movable supporting structure of the conveyors 21₁-2 14. The rods 26₁-26₄ are supported in a way known in itself by the stationary structure in a fixed height position, but can rotate each about its own longitudinal axis.

Referring for example to the aforementioned figure 7, there are visible the output shafts of the motors 25₁ and 25₃, designated by 25ₐ₁ and 25ₐ₃, on which the first gear wheels 25_{b1} and 25_{b3} are keyed. The gear wheels 25b₁ and 25b₃ are in turn meshed with the respective pinions 27₁ and 27₃, associated with an end region of the corresponding transmission rod 26₁ and 26₃, respectively. The pinions 27₁ and 27₃ are in turn meshed with the racks designated by 28₁ and 28₃, respectively, which are associated with the parts of the movable structure designated by 24₁ and 24₃ in figure 5. In figure 7 there are also visible the rods 26₂ and 26₄, with the corresponding pinions 27₂ and 27₄ meshed with the corresponding racks 28₂ and 28₄. Note that in Figure 7 the racks are partially overlapped, only the rack 28₄ being completely visible; as indicated, the racks 28₁-28₄ of figure 7 are associated or carried by the movable supporting structure of the conveyors 21₁-21₄, in particular by the corresponding parts indicated with 24₁-24₄. The arrangement, in relation to the motors 25₂ and 25₄ and the parts of movable structure 23₁-23₄ (on the left, in figure 5) is substantially mirrored to that represented schematically in figure 7.

As can be imagined, by means of the exemplified driving system, by driving for example the motor 25₁ in a certain direction, the rotation of the corresponding transmission rod 26₁ is obtained, and therefore of the pinions 27₁ keyed at the two opposite end regions of the rod itself. Given that the rod 26₁ is in a fixed height position, the rotation of the pinions 27₁ causes the vertical displacement of the corresponding racks 28₁, upwards or downwards, depending on the driving direction of the motor 25₁, and therefore a corresponding displacement of the movable structure 23₁-24₁: in this way, the height position of the transfer conveyor 21₁ can be varied as needed. Similar operation takes place in relation to the displacement in height of the other conveyors 21₂-21₄ of the output station 4.

In various preferential embodiments, each pusher device 11₁-11₄ is mounted movable in height, taking advantage of the motorized supporting system of a corresponding transfer conveyor 21₁-21₄. With this in mind, for example, the pusher devices 11₁-11₄ may each be supported - directly or indirectly - by the movable supporting structure of a respective transfer conveyor 21₁-21₄. In the following it is therefore assumed that the pusher devices 11₁, 11₂, 11₃ and 114 are supported by the movable supporting structures 23₁-24₁, 23₂-24₂, 23³-24₃, 23⁴-24₄, respectively, of the transfer conveyors 21₁-21₄. Of course, the means which mechanically connect each pusher device to the corresponding movable supporting structure are arranged laterally with respect to at least one chain 6, so as to allow the free movement of the latter.

The actuation arrangement of the movable supporting structure of each of the conveyors 21₁-21₄ is controlled by means of an appropriate control arrangement, exemplified by the block CS in figure 3, which may be for example represented by a controller who also supervises part of the operation of the packaging units PU1-PU4 downstream of the buffer 1, and possibly of the buffer 1 and of the production unit O1 upstream. The control arrangement CS can also be configured for controlling the motors 22₁-22₄ that drive the conveyor belts 21₁-21₄.

Preferably, for the purpose of controlling the position in height of the conveyors 21₁-21₄, the corresponding motorized supporting systems are provided with suitable position sensor means (for example encoder- or resolver-type sensors integrated to, or associated with, the corresponding motors 25₁-25₄) belonging to, or in signal communication with, the control arrangement CS.

The control arrangement CS is also configured for controlling each of the pusher devices 11₁-11₄ of the extraction unit 4.

According to an important aspect of the invention, the pusher devices 11₁-11₄ of the extraction station 4 are controllable (or operable between the respective inoperative and operative positions) independently of each other and, in the same way, the motorized supporting systems of the conveyors 21₁-21₄ of the output station 4 are controllable independently from each other.

In this way it is possible to cope with possible interruptions in the operation of one or more of the packaging units PU1-PU4 downstream of the buffer 1. The concept can be explained by referring to figures 5 and 8-11, which schematically illustrate some possible alternative operating conditions of the unloading arrangement comprising the stations 4 and 10.

Figure 5 shows a condition of normal or complete operation of the unloading arrangement. In this condition, the transfer conveyors 21₁-21₅ are arranged - thanks to the corresponding motorized supporting systems - in height positions corresponding to four successive product supports of the chain portion 6b, as in figure 6, and therefore in height positions functionally congruent to those of the pusher members 12₁-12₄ of the pusher devices 11₁-11₄. In this condition, the four pusher devices 11₁-11₄ and the four transfer conveyors 21₁-21₄ are active: the devices 11₁-11₄ therefore push the products sideways from the four supports 7 on the conveyors 21₁-21₄, with the latter which in turn convey the products unloaded from the supports 7 to the corresponding output conveyors 5₁-5₄, which feed the four packaging units PU1-PU4.

The fact that the transfer conveyors 21₁-21₄ and the corresponding pusher devices 11₁-11₄ can be moved in height makes it possible to exploit the unloading arrangement consisting of the extraction station 10 and the output stations 40 also as a tracking system, for the purpose of a correct passage of the products from the supports 7 to the corresponding conveyors 21₁-21₄.

In other words, during the movement of the chain 6 at the output area OUT (in the example shown, the displacement from top down of the chain portion 6b), the motorized supporting system can be controlled in such a way as to cause a temporary lowering of any conveyor 21ₙ and the corresponding pusher device 11ₙ, such that these "follow" a corresponding support 7 of the chain 6: in this way it can be ensured both the correct extraction of the product or the rank of products from the support 7 by the device 11ₙ, and the correct passage of the product or the rank of products in question on the conveyor 21ₙ; subsequently, the motorized supporting system is controlled in order to bring back the same conveyor 21ₙ and the corresponding pusher device 11ₙ at a subsequent support 7 of the chain, and then again "follow" it and for the purpose of the correct unloading and passage of the corresponding product or rank of products on the same conveyor 21ₙ, and so on sequentially.

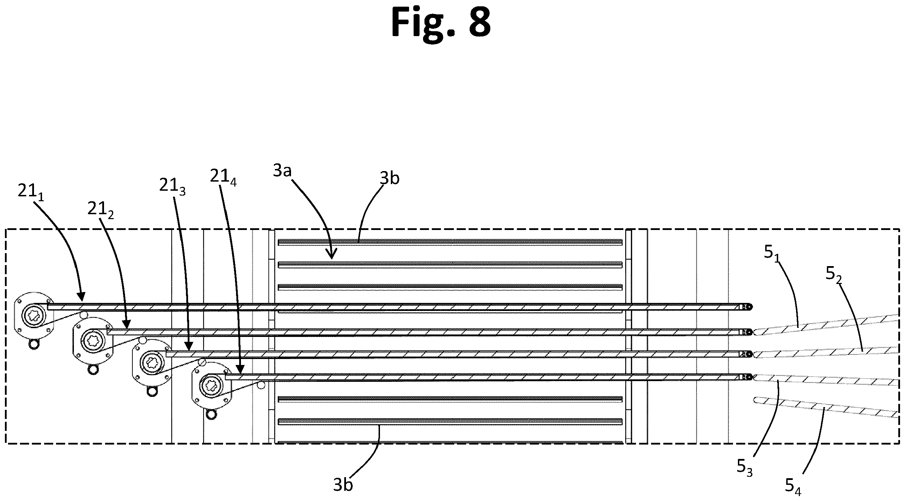

Figure 8 exemplifies the case where the packaging unit PU4 is not active. In such a case - compared to the case in figure 5 - the motorized supporting systems are operated to move the transfer conveyors 21₁-21₄ and the corresponding pusher devices 11₁-11₄ upwards, by a respective pitch: thus, the outlet ends of the transfer conveyors 214 and 21₁ are no longer at the inlet ends of the output conveyors 5₄ and 5₁, respectively; at the same time, the operation of the pusher device 11₁ is interrupted. Where appropriate, the control arrangement CS may also interrupt the operation of the motor 22₁ of the belt of the conveyor 21₁. In such a condition, the pusher devices 11₂-11₄ push the products sideways from three superimposed supports 7 on the transfer conveyors 21₂-21₄, with the latter in turn which convey the products unloaded from the supports 7 to the output conveyors 5₁-5₃ , respectively, which feed the three packaging units PU1-PU3.

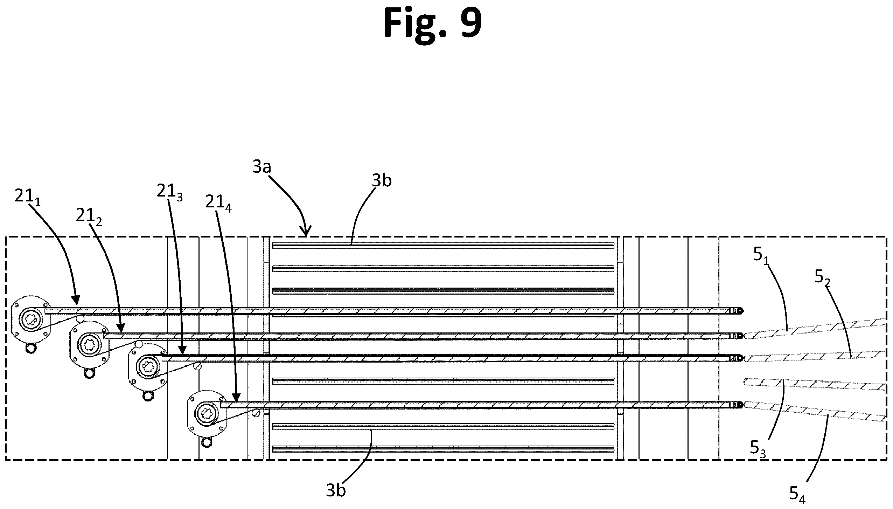

Figure 9 exemplifies the case where the packaging unit PU3 is not active. In such a case - compared to the case in figure 5 - the motorized supporting systems are operated to move only the transfer conveyors 21₁-21₃ and the corresponding pusher devices 11₁-11₃ upwards, by a respective pitch: in this way the outlet ends of the transfer conveyors 213 and 21₁ are no longer at the inlet ends of the output conveyors 5₃ and 5₁ respectively; at the same time the operation of the pusher device 11₁ is interrupted. Where appropriate, the control arrangement CS may also interrupt the operation of the motor 22₁ of the belt of the conveyor 21₁. In such a condition, the pusher devices 11₂, 11₃ and 11₄ push the products sideways from three corresponding supports 7 to the transfer conveyors 21₂, 21₃ and 21₄, with the latter in turn which convey the products unloaded from the supports 7 to the output conveyors 5₁, 5₂ and 5₄, respectively, which feed the three packaging units PU1, PU2 and PU4.

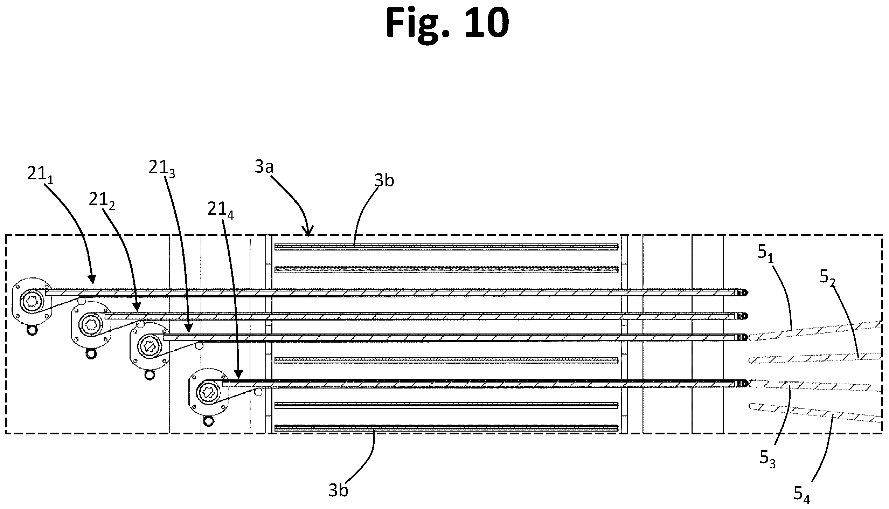

Figure 10 exemplifies the case where the packaging units PU2 and PU4 are both inactive. In such a case - compared to the case of figure 5 - the motorized supporting systems are operated to move upwards the transfer conveyors 21₁-21₃ and the related pusher devices 11₁-11₃ by two pitches (i.e., with a double stroke compared to the case of figure 8), and the transfer conveyor 214 with the relevant pusher device 11₄ by one pitch only: in this way, only the outlet ends of the transfer conveyors 21₃ and 214 will be at the inlet ends of the output conveyors 5₁ and 5₃, respectively; at the same time, the operation of the pusher devices 11₁ and 11₂ is interrupted. Where appropriate, the control arrangement CS may also interrupt the operation of the motors 22₁ and 22₂ of the belts of the conveyors 21₁ and 21₂. In such a condition, only the pusher devices 113 and 11₄ push the products sideways from two corresponding supports 7 to the transfer conveyors 213 and 21₄, with the latter in turn which conveys the products unloaded from the supports 7 to the output conveyors 5₁ and 5₃, respectively, that feed the two packaging units PU1 and P3.

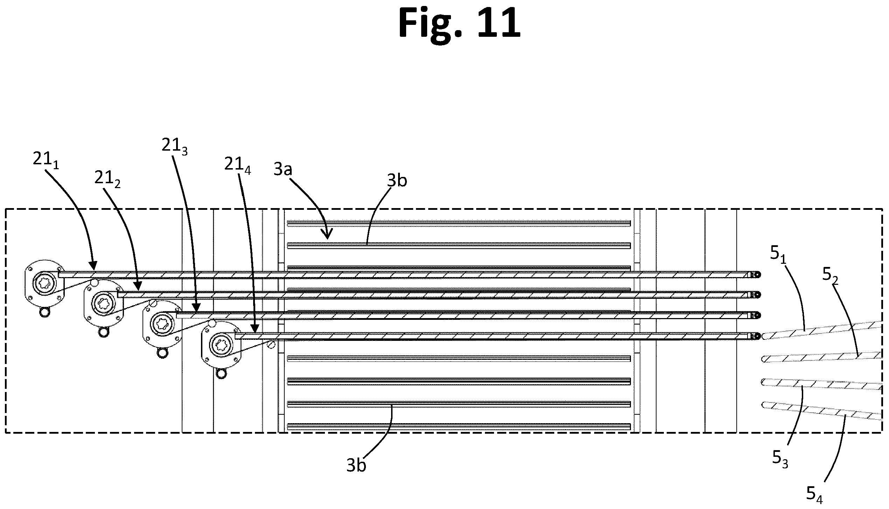

Figure 11 finally exemplifies the case where the packaging units PU2-PU4 are inactive. In such a case - compared to the case of figure 5 - the motorized supporting systems are operated to move the transfer conveyors 21₁-21₄ and the related pusher devices 11₁-11₄ three steps upwards, or with a triple stroke compared to the case of figure 8: in this way, only the outlet end of the transfer conveyor 214 will result at the inlet end of the output conveyor 5₁; at the same time the operation of the pusher devices 11₁-11₃ is interrupted. Where appropriate, the control arrangement CS may also interrupt the operation of the motors 22₁-22₃ of the belts of the conveyors 21₁-21₃. In such a condition, only the pusher device 11₄ push the products sideways from a corresponding support 7 to the transfer conveyor 21₄, with the latter which conveys in turn the products unloaded from the support 7 to the output conveyor 5₁, which feeds the packaging unit PU1.

As it can be noted, the variation of the position in height of a transfer conveyor does not imply a change of its direction of longitudinal extension, which remains substantially horizontal and parallel to the other transfer conveyors, or to the axes X.

Under the operating conditions shown in figures 8-11, the speed of the motorized wheels 4a' of the buffer 1 can be slowed down (for example brought to ¾ /4 in the case of figures 8-9, to ½ in the case of figure 10, and to ¼ in the case of figure 11, compared to the case of figure 5).

As mentioned, starting from the conditions shown in figures 5 and 8-11, the motorized supporting systems relating to the transfer conveyors being active (four, in the case of figure 5, three in the case of figures 8-9, two in the case of figure 10 and one in the case of figure 11) are controlled to obtain the tracking of the product supports 7, as previously indicated. In general, in the case of situations wherein at least one output conveyor 5₁-5₄ is not operational (figures 8-11), the products P will be firstly transferred from a shelf 7 to a corresponding transfer conveyor 21ₙ, which will then be brought in a position corresponding to a relevant output conveyor 5ₙ being active at the moment.

In the case of the conditions of figures 8-11, following the restoring of the operation of the non-functioning packaging unit(s) PU1-PU4, the transfer conveyors 21 may be brought back to their original positions of figure 5, controlling accordingly the corresponding motorized supporting systems, and all the pusher devices 11 may be newly activated, as well as the motors 22 of the belts which had been possibly stopped. The figures exemplify the case of an unloading arrangement including four transfer conveyors and four pusher devices, but as mentioned their number may vary.

In general terms, under any operating conditions of the feeding assembly SA, at least one transfer conveyor 21 and a corresponding pusher device 11 will always be active; in the examples given, said conveyor and pusher device are those designated with 214 and 114, but in other embodiments the conveyor and the pusher device which are always active could be another (for example the conveyor 21₁ and the device 11₁).

The characteristics of the present invention are clear from the given description, as are its advantages, mainly represented by the fact that the described feeding assembly makes it possible to effectively cope with any interruptions in the operation of one or more of the packaging units located downstream of the same assembly. Advantageously, the motorized supporting system of the transfer conveyors of the output station of the assembly may also be exploited to obtain the product tracking function of the buffer device.

Of course, without prejudice to the principle of invention, the details of construction and the embodiments may be widely varied with respect to what has been described and illustrated, without departing from the scope of the invention as defined by the claims that follow.

Previously, the possibility of mounting the pusher devices 11₁-11₄ in stationary positions has been mentioned. Such an actuation variant can be implemented, for example, when the height of the receiving space of the products defined between two successive supports 7, and the height of the products themselves, is sufficiently large (also in relation to the speed of the chain 6) to enable the pusher members 12₁-12₄ to determine the discharge of the products from the supports 7 even in the absence of tracking, despite the movement of the supports from top down, at the output area OUT of the buffer 1. Of course, in such a case of stationary mounting, the operation of the pusher devices 11₁-11₄ will be managed differently from what has been previously described with reference to figures 8-11 (in particular, in the case of figure 8 the operation of the pusher device 11₄ will be interrupted, in the case of figure 9 the operation of the pusher 11₃ will be interrupted, in the case of figure 10 the operation of the pusher devices 11₄ and 11₂ will be interrupted, and in the case of figure 11 the operation of the pusher devices 11₂-11₄ will be interrupted).

## Claims

1. A product feeding assembly for an automatic packaging plant, the feeding assembly (SA) comprising:
- a buffer device (1) for temporary storage of products (P), the buffer device (1) having an input area (IN), for input of products (P), and an output area (OUT), for output of products (P),
- an unloading arrangement, operatively associated to the output area (OUT) of the buffer device (1), the unloading arrangement including an extraction station (10) and an output station (4),
wherein the buffer device (1) comprises a plurality of guiding member (4a, 4b) which are rotatable about respective generally parallel axes (X), and configured for guiding movement of at least one chain or the like (6) according to a closed-loop path, the at least one chain (6) having associated thereto a plurality of product supports (7) at substantially constant distances from one another (7),
wherein the closed-loop path is configured in such a way that, at the output area (OUT) of the buffer device (1), at least one first chain portion (6b) is movable in vertical direction between the extraction station (10) and the output station (4), with the corresponding product supports (7) in positions on top of one another,
wherein the extraction station (10) comprises a plurality of controllable pusher devices (11₁-11₄), in positions on top of one another in vertical direction, each pusher device (11₁-11₄) having a pusher member (12₁-12₄) which is displaceable transversally with respect to the at least one first chain portion (6b) between an inoperative position, in which a head end of the pusher member (12₁-12₄) is in a retracted position with respect to the at least one first chain portion (6b), and an operative position, in which the head end of the pusher member (12₁-12₄) is inserted at least partially in a product receiving space defined between two adjacent product supports (7) of the at least one first chain portion (6b),
wherein the output station (4) comprises a plurality of transfer conveyors (21₁-21₄) in positions on top of one another in vertical direction, each transfer conveyor (21₁-21₄) longitudinally extending in a direction generally parallel to the axes (X) of the guiding members (4a, 4b) of the buffer device (1),
wherein each of the transfer conveyors (21₁-21₄) is configured for receiving thereon at least one product (P) unloaded from a corresponding product support (7) by a corresponding pusher device (12₁-12₄) in the operative position thereof, in particular for addressing the at least one product (P) towards a feeding conveyor (5₁-5₅) of a corresponding packaging unit (PU1-PU4),
wherein the output station (4) comprises a plurality of motorized supporting systems (22₁-28₁, 22₂-28₂, 22₃-28₃, 22₄-28₄), one for each transfer conveyor (21₁-21₄), each motorized supporting system (22₁-28₁, 22₂-28₂, 22₃-28₃, 22₄-28₄) being configured for enabling variation of the position in height of the corresponding transfer conveyor (21₁-21₄),
wherein the pusher devices (11₁-11₄) are operable in an independent way from one another, for causing passage of the corresponding pusher members (12₁-12₄) between the respective inoperative and operative positions, and the motorized supporting systems (22₁-28₁, 22₂-28₂, 22₃-28₃, 22₄-28₄) of the transfer conveyors (21₁-21₄) are operable in an independent way from one another.

2. The product feeding assembly according to Claim 1, wherein each of the pusher devices (11₁-11₄) is supported by a corresponding motorized supporting system of the plurality of motorized supporting systems (22₁-28₁, 22₂-28₂, 22₃-28₃, 22₄-28₄), to be displaceable therewith in vertical direction.

3. The product feeding assembly according to Claim 1 or Claim 2, comprising a control arrangement (CS) configured for controlling each of the motorized supporting systems (22₁-28₁, 22₂-28₂, 22₃-28₃, 22₄-28₄) of the output station (4) and each of the pusher devices (11₁-11₄) of the extraction station (4).

4. The product feeding assembly according to any one of Claims 1-3, wherein each of the motorized supporting systems (22₁-28₁, 22₂-28₂, 22₃-28₃, 22₄-28₄) comprises position sensor means, for control of the position in height of the corresponding transfer conveyor (21₁-21₄).

5. The product feeding assembly according to any one of Claims 1-4, wherein each of the motorized supporting systems (22₁-28₁, 22₂-28₂, 22₃-28₃, 22₄-28₄) comprises a movable supporting structure (23₁-24₁, 23₂-24₂, 23³-24₃, 23₄-24₄), mounted vertically movable, and to which a corresponding actuation arrangement (25₁-28₁, 25₂-28₂, 25₃-28₃, 25₄-28₄) is operatively associated.

6. The product feeding assembly according to Claim 5, wherein the movable supporting structure comprises at least one of the following:
- two structure portions (23₁-23₄, 24₁-24₄) at two opposite longitudinal end regions of the corresponding transfer conveyor (21₁-21₄),
- one or more guided elements engaged with corresponding guiding elements borne by a stationary structure (1a, 1a', 1a").

7. The product feeding assembly according to Claim 5, wherein the actuation arrangement (25₁-28₁, 25₂-28₂, 25₃-28₃, 25₄-28₄) comprises at least one actuator (25₁, 25₂, 25₃, 25₄), in particular a reversible actuator, having associated thereto at least one corresponding mechanical transmission arrangement (26₁-28₁, 26₂-28₂, 26₃-28₃, 26₄-28₄).

8. The product feeding assembly according to Claim 7, wherein the at least one actuator comprises a bi-directional electrical motor (25₁, 25₂, 25₃, 25₄), mounted in a fixed position on a stationary structure (1a"), and the mechanical transmission arrangement comprises a rack-pinion transmission (27₁-28₁, 27₂-28₂, 27₃-28₃, 27₄-28₄).

9. The product feeding assembly according to Claim 8, wherein the bidirectional electrical motor (25₁, 25₂, 25₃, 25₄) is configured for operating a corresponding rotatable transmission rod (26₁, 26₂, 26₃, 26₄) which bears, at two opposite end regions thereof, respective gears (27₁, 27₂, 27₃, 27₄) operating as a pinion, designed for cooperating with respective racks (28₁, 28₂, 28₃, 28₄) associated to the corresponding movable supporting structure (23₁-24₁, 23₂-24₂, 23³-24₃, 23₄-24₄).

10. The product feeding assembly according to any one of Claims 1-9, wherein the buffer device (1) includes a movable carriage (5) bearing one or more of the guiding members (4b), the path of the chain (6) comprising two first stretches having a fixed length and a plurality of second stretches having a length which is variable depending on a position of the carriage (5).
